(19) Europäisches Patentamt
European Patent Office
Office européen des brevets

(11) **EP 3 817 880 B1**

(12) **FASCICULE DE BREVET EUROPEEN**

(45) Date de publication et mention de la délivrance du brevet:
**31.08.2022   Bulletin 2022/35**

(51) Classification Internationale des Brevets (IPC):
**B23H 7/08** *(2006.01)*   **B21C 37/04** *(2006.01)*
**C23C 28/02** *(2006.01)*

(21) Numéro de dépôt: **19734920.2**

(22) Date de dépôt: **28.06.2019**

(52) Classification Coopérative des Brevets (CPC):
**B23H 7/08; B21C 1/003; B21C 37/042;**
**B21C 37/045; C23C 10/28**

(86) Numéro de dépôt international:
**PCT/IB2019/055498**

(87) Numéro de publication internationale:
**WO 2020/008312 (09.01.2020 Gazette 2020/02)**

(54) **FIL ÉLECTRODE A COUCHE POREUSE POUR ÉLECTROEROSION ET PROCÉDÉS DE RÉALISATION D'UN TEL FIL ÉLECTRODE**

DRAHTELEKTRODE ZUR FUNKENEROSION MIT EINER PORÖSEN SCHICHT UND VERFAHREN ZUR HERSTELLUNG EINER SOLCHEN DRAHTELEKTRODE

WIRE ELECTRODE FOR ELECTRICAL DISCHARGE MACHINING HAVING A POROUS LAYER AND METHOS OF MANUFACTURING SUCH A WIRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **03.07.2018   FR 1856118**

(43) Date de publication de la demande:
**12.05.2021   Bulletin 2021/19**

(73) Titulaire: **Thermocompact**
**74370 Metz Tessy (FR)**

(72) Inventeurs:
• **LY, Michel**
**F-74000 Annecy (FR)**
• **SANCHEZ, Gérald**
**74230 Dingy-Saint-Clair (FR)**
• **OUVRARD, Blanche**
**74000 Annecy (FR)**
• **LAFLEUR, Ludovic**
**74290 Talloires-Montmin (FR)**

(74) Mandataire: **Cabinet Poncet**
**7, chemin de Tillier**
**B.P. 317**
**74008 Annecy Cedex (FR)**

(56) Documents cités:
**EP-A1- 0 930 131     FR-A1- 2 881 973**
**JP-A- 2014 136 285**

EP 3 817 880 B1

**Description**

DOMAINE TECHNIQUE DE L'INVENTION

La présente invention concerne les fils électrodes utilisés pour couper des métaux ou des matériaux conducteurs de l'électricité, par électroérosion dans une machine d'usinage par électroérosion.

Le procédé bien connu d'usinage par électroérosion permet d'enlever de la matière sur une pièce conductrice de l'électricité, en générant des étincelles dans une zone d'usinage entre la pièce à usiner et un fil électrode conducteur de l'électricité. Le fil électrode défile en continu au voisinage de la pièce dans le sens de la longueur du fil, tenu par des guidages, et il est déplacé progressivement dans le sens transversal en direction de la pièce, soit par translation transversale des guidages du fil soit par translation de la pièce.

Un générateur électrique, connecté au fil électrode par des contacts électriques à l'écart de la zone d'usinage, établit une différence de potentiel appropriée entre le fil électrode et la pièce conductrice à usiner. La zone d'usinage entre le fil électrode et la pièce est plongée dans un fluide diélectrique approprié. La différence de potentiel provoque entre le fil électrode et la pièce à usiner l'apparition d'étincelles qui érodent progressivement la pièce et le fil électrode. Le défilement longitudinal du fil électrode permet de conserver en permanence un diamètre de fil suffisant pour éviter sa rupture dans la zone d'usinage. Le déplacement relatif du fil et de la pièce dans le sens transversal permet de découper la pièce ou de traiter sa surface, le cas échéant.

Les particules détachées du fil électrode et de la pièce par les étincelles se dispersent dans le fluide diélectrique où elles sont évacuées.

L'obtention d'une précision d'usinage, notamment la réalisation de découpes d'angle à faible rayon, nécessite d'utiliser des fils de petit diamètre et supportant une grande charge mécanique à la rupture pour être tendus dans la zone d'usinage et limiter l'amplitude des vibrations.

La plupart des machines d'usinage par électroérosion modernes sont conçues pour utiliser des fils métalliques, généralement de 0,25 mm de diamètre, et de charge à rupture comprise entre 400 et 1 000 N/mm$^2$.

L'usinage par électroérosion étant un procédé relativement lent, il y a simultanément un besoin pour maximiser la vitesse d'usinage, notamment la vitesse d'usinage en ébauche. Dans la présente demande de brevet, la vitesse d'usinage en ébauche est évaluée en mm$^2$/min, c'est-à-dire en vitesse d'accroissement d'une surface tranchée, ou en mm/min à hauteur donnée de pièce, c'est-à-dire en vitesse de pénétration du fil dans la pièce.

On a admis jusqu'à présent que cette vitesse dépend directement de l'énergie d'étincelage dégagée dans la zone d'usinage entre le fil et la pièce à usiner, et dépend donc de l'énergie électrique que peut conduire le fil jusqu'à la zone d'usinage. Mais les décharges érosives dans la zone d'usinage, et l'effet Joule produit par le courant électrique traversant le fil, tendent à échauffer le fil et à réduire simultanément sa résistance mécanique à la rupture.

Une des limites des fils pour électroérosion est ainsi qu'ils se rompent sous l'effet combiné de l'échauffement et de la tension mécanique. Cela contraint les utilisateurs à limiter la puissance d'usinage de leurs machines d'érosion, et cela limite simultanément la vitesse d'usinage.

On a déjà proposé d'utiliser des fils pour électroérosion comportant une âme métallique et un revêtement continu de zinc, l'effet du revêtement étant de limiter l'échauffement de l'âme métallique grâce à l'énergie calorifique consommée par le zinc lors de sa vaporisation. Cela permet d'augmenter la puissance d'usinage délivrée par la machine d'électroérosion, et donc la vitesse d'usinage par rapport à celle d'un fil de laiton nu. Mais la couche de zinc pur s'use très rapidement, et ne protège pas l'âme du fil pendant une durée suffisante pour la découpe de pièces hautes.

Le document CH 633 739 A5 décrit un fil pour électroérosion et son procédé de fabrication, le fil ayant une âme pouvant être en cuivre ou en alliage de cuivre et de zinc, et ayant un revêtement en un alliage différent de cuivre et de zinc et recouvert d'un film en oxyde de zinc. Le document mentionne que le revêtement en alliage de cuivre et de zinc présente une structure poreuse résultant de l'effet Kirkendall (vitesses de diffusion différentes du cuivre et du zinc), et que le fil présente une surface rugueuse ayant des trous de 1 à 2 $\mu$m, le film d'oxyde de zinc épousant les rugosités de la surface. Le document enseigne que cette structure superficielle rugueuse du fil se laisse mouiller plus facilement par l'eau qui sert de liquide diélectrique d'usinage, ce qui augmente la fonction de refroidissement du fil et permet de faire passer un courant plus élevé.

Le document EP 0 930 131 B1 décrit également un fil pour électroérosion, et son procédé de fabrication, le fil ayant une âme en un premier métal comprenant du cuivre, une couche d'alliage formée sur l'âme, et une couche superficielle sur la couche d'alliage et constituée d'un second métal ayant une température de vaporisation plus faible que celle du premier métal. Le document enseigne l'intérêt d'obtenir une couche poreuse en surface du fil, et les pores sont ouverts car cela augmente la surface de contact entre le fil et le liquide diélectrique d'usinage, pour mieux refroidir le fil. Le document enseigne également que la couche poreuse favorise l'évacuation des déchets d'usinage. Il en résulte une augmentation de la vitesse d'usinage. Selon le procédé décrit dans ce document, la surface du fil est fissurée. Le fil est obtenu en trempant une âme de laiton de 0.9 mm de diamètre dans un bain de zinc en fusion, puis en tréfilant ce fil revêtu jusqu'au diamètre final de 0.1 à 0.4 mm.

Dans le document US 5,945,010, on a proposé de recuire un laiton en phase α zingué de manière à produire une couche périphérique en laiton en phase γ, puis de tréfiler l'ébauche ainsi obtenue pour l'amener au diamètre final. Le tréfilage produit une couche superficielle de laiton en phase γ fracturée. Les fractures sont ouvertes vers l'extérieur, de sorte que le taux de couverture de l'âme par la couche périphérique en laiton de phase γ est au plus de 58 %. La surface du fil pour électroérosion qui en résulte est irrégulière, et le document enseigne que cela favorise l'évacuation des déchets d'usinage, sans toutefois que la vitesse d'usinage soit augmentée.

Le document US 8,067,689 B2 enseigne l'intérêt d'une sous-couche de laiton en phase γ fracturée, noyée dans une couche externe substantiellement continue de zinc ou de laiton en phase ε. Le fil pour électroérosion est obtenu en prenant une âme de laiton contenant 60 % de cuivre et 40 % de zinc, ayant un diamètre de 0.9 mm, sur laquelle on réalise un revêtement de 10 μm de zinc. Un traitement thermique de 6 heures à 170 °C dans de l'azote transforme, par diffusion, le zinc en une couche de laiton en phase γ. La couche de laiton en phase γ est ensuite recouverte par électrolyse d'une couche superficielle de 10 μm de zinc, et une opération de tréfilage réduit le diamètre à 0.25 mm. Le document enseigne que l'opération de tréfilage fracture la couche de laiton en phase γ, et que simultanément le zinc de la couche superficielle encapsule les particules de laiton en phase γ résultant de la fracturation. Le document mentionne également que le zinc de la couche superficielle peut être ensuite transformé en laiton en phase ε par un traitement thermique à basse température, et que la phase ε qui en résulte peut être poreuse. Les pores sont ouverts car ils peuvent être à leur tour remplis de graphite par une opération de tréfilage en présence d'une suspension de particules de graphite dans un milieu aqueux. Un inconvénient d'un tel fil pour électroérosion est que la couche superficielle tend à laisser se détacher une partie de son matériau sous forme de poudre lors de l'utilisation du fil dans une machine d'électroérosion. Une telle poudre peut s'accumuler dans les guidages et provoquer des blocages et des ruptures indésirables du fil pour électroérosion.

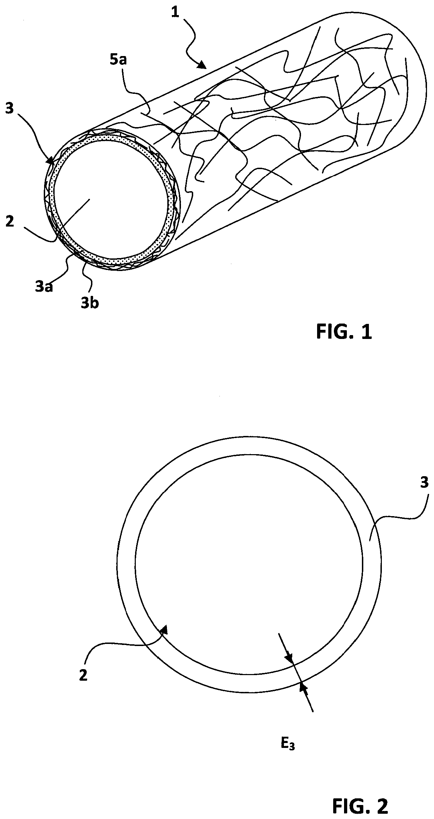

Le document FR 2 881 973 A1 décrit un fil électrode selon le préambule de la revendication 1. Les tailles des pores couverts illustrés sur la figure 2 ne sont pas décrites explicitement, et aucun procédé n'est décrit pour obtenir des pores couverts ayant une taille supérieure à 2 μm.

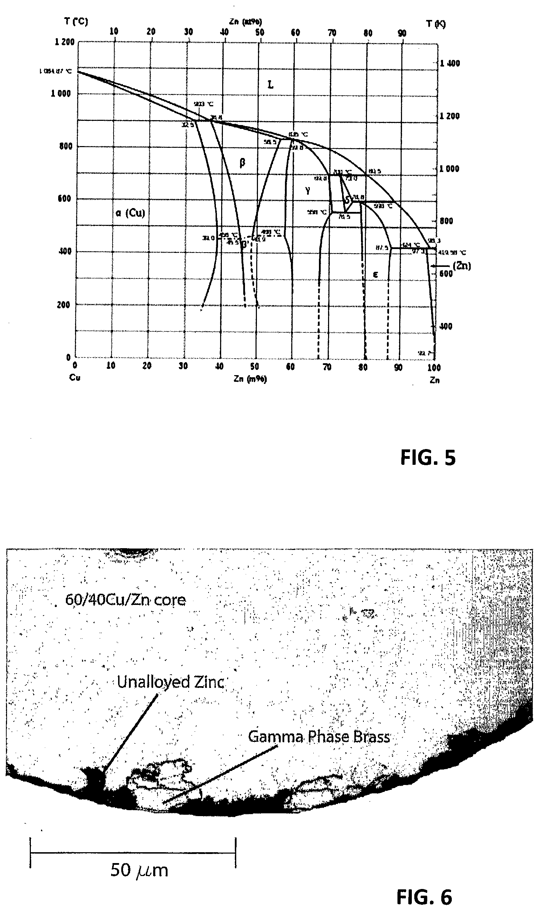

Dans la présente description et dans les revendications, la structure des fils pour électroérosion est caractérisée notamment par les phases des alliages composant le revêtement de l'âme métallique. Ces phases sont décrites dans les diagrammes d'équilibres de phases du système cuivre-zinc. Un exemple d'un tel diagramme d'équilibre est reproduit sur la figure 6. Les phases sont caractérisées par leur composition ou par leur structure cristallographique.

En pratique, on désigne par l'expression "laiton en phase β" un alliage de cuivre et de zinc ayant sensiblement 45 % à 49 % de zinc. A température ambiante, cette phase β est ordonnée et plutôt fragile, et on l'appelle habituellement β'. Si l'on dépasse une certaine température, la structure devient désordonnée et on parle alors de phase β. La transition entre les phases β et β' est inévitable, mais produit peu d'effets. En conséquence, par raison de simplicité, ce laiton sera désigné dans la présente description par la seule expression "laiton en phase β".

Dans la description et dans les revendications, l'expression "laiton en phase γ " est utilisée pour désigner un alliage de cuivre et de zinc dans lequel le zinc est présent en proportion d'environ 67 % en poids.

Dans la description et dans les revendications, l'expression "laiton en phase ε" est utilisée pour désigner un alliage de cuivre et de zinc dans lequel le zinc est présent en proportion d'environ 83 % en poids.

Dans la description et dans les revendications, l'expression "laiton en phase η" est utilisée pour désigner un alliage de cuivre et de zinc dans lequel le zinc est présent en proportion comprise entre 99 % et 100 % en poids.

Un "laiton en phase a" pourra avoir une teneur en zinc inférieure à 40 % en poids, par exemple d'environ 35 %, ou même d'environ 20 % en poids.

EXPOSE DE L'INVENTION

Il existe encore un besoin d'usiner le plus vite possible, tout en évitant le détachement de matériau sous forme de poudre lors de l'usinage.

La présente invention résulte de l'observation surprenante selon laquelle, dans un fil électrode pour électroérosion ayant une structure d'âme donnée et un revêtement comprenant une couche fracturée en un alliage contenant plus de 50 % en poids de zinc, on peut encore augmenter la vitesse d'usinage lorsque des pores couverts sont présents dans la couche fracturée sous la surface du fil, et lorsque les pores ont une dimension suffisante et sont suffisamment couverts pour que le revêtement couvre la majeure partie de l'âme. Cette constatation va à l'encontre de l'enseignement des documents CH 633 739 A5, EP 0 930 131 B1 et US 5,945,010, qui incitent au contraire, pour augmenter la vitesse de coupe, à réaliser une couche superficielle de fil irrégulière, c'est-à-dire comprenant de nombreux pores ouverts vers l'extérieur, pour favoriser le contact avec le liquide diélectrique pour le refroidissement du fil, et pour favoriser les turbulences hydrauliques dans le liquide diélectrique pour l'évacuation des déchets d'usinage.

À cet égard, pour la comparaison des effets techniques obtenus avec divers revêtements, il est nécessaire que les fils électrodes pour électroérosion aient une même structure d'âme. On sait en effet que la structure de l'âme a un effet sur la vitesse de l'usinage par électroérosion. Par exemple, pour une même structure du revêtement, un fil pour électroérosion ayant une âme en un laiton contenant 80 % de cuivre et 20 % de zinc permet une vitesse d'usinage plus grande qu'un fil pour électroérosion ayant une âme en un laiton contenant 63 % de cuivre et 37 % de zinc.

Dans la présente description et les revendications annexées, un pore désigne un volume ne contenant pas de matière solide, inclus dans un plus grand volume de matière à l'état solide. Dans un plan de section du fil électrode pour électroérosion, un pore est une surface du plan ne comprenant pas de matière solide. Les dimensions d'un pore dans le plan d'observation sont dites supérieures à 2 $\mu$m lorsqu'on peut tracer un cercle de diamètre 2 $\mu$m à l'intérieur du pore. Ainsi, la taille du pore est le diamètre du cercle le plus grand que l'on peut tracer à l'intérieur.

Un pore ouvert, tel que ceux présents dans la surface irrégulière des fils électrodes pour électroérosion décrits dans les documents d'art antérieur cités ci-dessus, n'est pas couvert par de la matière solide. Ainsi, une droite radiale, partant de l'axe du fil électrode pour électroérosion, et traversant ledit cercle, sort définitivement de la zone de matière solide de la section graphique observée.

Au contraire, un pore couvert au sens de la présente invention apparaît limité par de la matière solide en surface du fil. Dans ce cas, toute droite radiale, partant de l'axe du fil électrode pour électroérosion et traversant ledit cercle définissant la taille du pore, ne sort du fil qu'après avoir de nouveau traversé de la matière solide.

Pour l'observation des pores dans un plan d'observation en section d'un fil, il convient de réaliser une section, de la polir, et de l'observer avec un microscope à faible profondeur de champ. Une profondeur de champ de moins de 1 $\mu$m peut convenir.

Le taux de couverture longitudinale désigne, quand on observe une section longitudinale de fil, la longueur de fil recouverte par le revêtement, divisée par la longueur totale de la section longitudinale observée du fil.

Les sections longitudinales du fil pour électroérosion passent par un plan qui est proche de l'axe longitudinal médian du fil. On s'en assure en mesurant la largeur apparente du fil, qui doit être égale au diamètre du fil par exemple à 2 % près.

Pour la description et l'évaluation du nombre de pores, on considère des sections planes transversales du fil pour électroérosion, c'est-à-dire des sections approximativement perpendiculaires à l'axe longitudinal du fil pour électroérosion. On s'assure de l'orientation transversale de la section plane en comparant le grand axe et le petit axe de l'ellipse formant le contour de la section plane transversale. La longueur du petit axe de l'ellipse doit être d'au moins 0.9 fois la longueur du grand axe pour que la section soit considérée comme transversale c'est-à-dire approximativement perpendiculaire à l'axe du fil.

Ainsi, pour améliorer encore la vitesse d'usinage par électroérosion, la présente invention propose un fil électrode pour usinage par électroérosion, comprenant :

- une âme métallique, en une ou plusieurs couches de métal ou d'alliage métallique,
- sur l'âme métallique, un revêtement ayant un alliage différent de celui de l'âme métallique et contenant plus de 50 % en poids de zinc ,
- le revêtement comprend de l'alliage cuivre-zinc en phase $\gamma$ fracturée,
- le revêtement contient des pores couverts ayant une taille supérieure à 2 $\mu$m, dans lequel :
- tout ou partie des pores sont couverts par un ou plusieurs alliages de cuivre et de zinc à plus de 58 % et moins de 100 % de zinc en poids.

Sans que ces explications soient certaines, on pense que les pores couverts de taille suffisante réduisent la conductibilité thermique du fil dans la direction radiale entre la surface externe du fil et l'âme. Lorsque la surface du fil électrode est soumise à une étincelle d'usinage, sa température superficielle augmente ainsi plus rapidement en présence de pores couverts qu'en leur absence. En conséquence, la couche superficielle métallique qui recouvre les pores du fil électrode s'évapore plus rapidement. Pendant la courte durée de l'étincelle, cela crée une forte pression de vapeur métallique dans l'arc électrique, et cette forte pression augmente l'enlèvement de matière à la surface de la pièce à usiner. On optimise ainsi l'efficacité de l'arc électrique grâce à l'évaporation rapide de la matière qui recouvre les pores, cette évaporation étant accélérée grâce à l'isolation procurée par les pores eux-mêmes vis-à-vis de l'âme du fil électrode.

Simultanément, au résultat du procédé de fabrication permettant de réaliser les pores couverts, du fait du tréfilage modéré, on constate une réduction sensible du risque d'effritement de la couche superficielle du fil électrode, effritement susceptible de laisser échapper du matériau en forme de poudre lors de l'utilisation du fil électrode pour un usinage par électroérosion. En outre, on constate une meilleure rectitude du fil électrode lors de l'étape initiale d'enfilage dans une machine d'électroérosion, car le traitement thermique de diffusion permettant de conserver l'alliage de cuivre et de zinc à plus de 58 % de zinc en poids se fait en dessous de la température de recristallisation de l'âme.

Egalement, au résultat du procédé, on constate que l'on obtient des taux de couverture élevés. Ainsi, le taux de couverture est supérieur à 85 % pour un diamètre de fil électrode de 0.30 mm environ, le taux de couverture est supérieur à 75 % pour un diamètre de fil électrode de 0.25 mm environ, et le taux de couverture est supérieur à 65 % pour un diamètre de fil électrode de 0.20 mm environ.

Plus avantageusement, pour un diamètre de fil électrode de 0.25 mm environ, le taux de couverture sera supérieur à 85 %.

Plus avantageusement, on peut prévoir que tout ou partie des pores sont couverts par un ou plusieurs alliages de cuivre et de zinc à plus de 78 % et moins de 100 % de zinc en poids.

Selon un mode de réalisation particulier, on peut prévoir que tout ou partie des pores sont couverts par un mélange d'alliages de cuivre et de zinc en phase ε et en phase η.

Par ailleurs, pour augmenter encore la vitesse d'usinage en ébauche, on peut avantageusement prévoir que l'âme comporte un cœur métallique et une couche intermédiaire en alliage de cuivre et de zinc en phase β.

Dans ce cas, le cœur peut être en cuivre ou en alliage de cuivre.

Selon un mode de réalisation avantageux, le revêtement du fil électrode comprend en moyenne, dans chaque section transversale complète du fil électrode, au moins 3 pores couverts ayant une taille supérieure à 2 μm.

De préférence, le revêtement du fil électrode comprend en moyenne, dans chaque section transversale complète du fil électrode, au moins 5 pores couverts ayant une taille supérieure à 2 μm.

On peut trouver avantage à prévoir que le revêtement du fil électrode contient des pores couverts ayant une taille supérieure à 3 μm, ou plus avantageusement qu'il contient des pores couverts ayant une taille supérieure à 4 μm.

Une difficulté qu'il a fallu résoudre dans la conception de la présente invention a été de concevoir des procédés permettant de réaliser les pores couverts de taille suffisante et en nombre suffisant.

En effet, les procédés décrits dans les documents d'art antérieur précédemment cités conduisent à réaliser des pores ouverts, c'est-à-dire des trous dans la surface extérieure du fil pour électroérosion, réduisant sensiblement le taux de couverture, et produisant des effets techniques différents de ceux recherchés par la présente invention.

En partant de l'observation qu'un tréfilage d'une ébauche de fil ayant un revêtement en alliage de cuivre et de zinc en phase γ fracture la couche d'alliage et produit des interstices entre des blocs d'alliage, les inventeurs ont cherché à recouvrir au moins en partie les interstices pour produire ainsi des pores couverts.

Cependant, il ne suffit pas de superposer à la couche d'alliage de cuivre et de zinc en phase γ une couche superficielle de zinc ou d'un autre alliage de zinc pour obtenir des pores couverts procurant des performances améliorées. Il a été constaté que :

- si la couche superficielle en zinc, en alliage de cuivre et de zinc en phase η, ou en alliage de cuivre et de zinc en phase ε est trop épaisse par rapport à l'épaisseur de la couche d'alliage de cuivre et de zinc en phase γ, alors la couche d'alliage de cuivre et de zinc en phase γ ne se fracture pas et il n'y a pas de pores, ni d'amélioration de la vitesse d'usinage ;
- si la couche superficielle en zinc, en alliage de cuivre et de zinc en phase η, ou en alliage de cuivre et de zinc en phase ε est trop fine par rapport à l'épaisseur de la couche d'alliage de cuivre et de zinc en phase γ, alors les pores sont ouverts au lieu d'être couverts, et il n'y a pas d'amélioration de la vitesse d'usinage ;
- si la couche d'alliage de cuivre et de zinc en phase γ est trop fine, alors le zinc, l'alliage de cuivre et de zinc en phase η, ou l'alliage de cuivre et de zinc en phase ε remplit les interstices entièrement ou presque entièrement, et il n'y a pas de pores couverts, ou les pores couverts sont de petite taille, et l'effet sur la vitesse d'usinage est faible ou nul ;
- si la couche d'alliage de cuivre et de zinc en phase γ est trop épaisse, alors le fil tréfilé est fragile, c'est-à-dire qu'il se casse facilement quand on le plie, notamment lors d'une étape de renfilage automatique suite à une rupture ;
- si le tréfilage n'est pas correctement effectué sur des couches d'alliage appropriées, le fil électrode produit beaucoup de poudre lors de son utilisation en usinage par électroérosion.

Selon une première possibilité, on a réalisé un revêtement de zinc pardessus les interstices déjà créés dans la phase γ fracturée du revêtement. Les vides sont ainsi emprisonnés et constituent des pores couverts, ou des sites d'amorçage de ceux-ci.

Selon une seconde possibilité, on a réalisé un tréfilage très faible d'un fil revêtu d'une superposition de couches en phases γ et η (zinc faiblement allié).

Ainsi, selon un autre aspect, l'invention propose un procédé économique pour réaliser un tel fil électrode, comprenant les étapes :

a) prévoir une âme en laiton,
b) recouvrir l'âme d'une couche de zinc par voie électrolytique, pour réaliser une pré-ébauche,
c) soumettre la pré-ébauche à un premier tréfilage jusqu'à un diamètre d'environ 120 % du diamètre final,
d) soumettre la pré-ébauche tréfilée à un traitement thermique de diffusion à une température comprise entre 170°C environ et 180°C environ et pendant une durée de 2h environ, en choisissant l'épaisseur de la couche de zinc, la température et la durée de façon à produire, par diffusion entre le zinc de la couche de couverture et le laiton de l'âme, une ébauche ayant une sous-couche en laiton en phase γ, une couche intermédiaire en laiton en phase ε, et une couche externe en zinc ou en laiton en phase η,

e) soumettre l'ébauche ainsi diffusée à un second tréfilage à froid, pour l'amener au diamètre final.

Le laiton en phase γ s'est fracturé pendant le second tréfilage.

Au cours du second tréfilage, la couche en laiton en phase ε et le zinc de surface n'ont que très partiellement rempli les vides créés entre les blocs de phase γ, réalisant ainsi des pores couverts.

Par un traitement thermique ultérieur à basse température, vers 140 °C, la couche externe de zinc ou de laiton en phase η couvrant les pores peut être convertie en phase ε ou en phase γ, sans que l'âme soit recristallisée, c'est-à-dire sans qu'elle passe de l'état écroui à l'état recuit.

De préférence, le premier tréfilage réalise une réduction de diamètre comprise entre 40 % et 78 % environ.

D'autres procédés pour obtenir des pores couverts sont exposés dans la description qui suit.

Parmi les procédés qui sont décrits, on pourra préférer ceux qui sont particulièrement adaptés à une production industrielle, par leur facilité de mise en œuvre grâce à des traitements thermiques en nombre réduit et exécutés sur un diamètre de fil nettement plus grand que le diamètre final.

DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :

- la figure 1 est une vue schématique en perspective d'un fil électrode pour électroérosion selon la présente invention ;
- la figure 2 est une coupe schématique transversale à plus grande échelle du fil électrode de la figure 1, selon un premier mode de réalisation de l'âme du fil électrode ;
- la figure 3 est une coupe schématique transversale à plus grande échelle du fil électrode de la figure 1, selon un second mode de réalisation de l'âme du fil électrode;
- la figure 4 est une vue schématique partielle en section longitudinale à plus grande échelle d'un tronçon du fil électrode selon la figure 1 ;
- la figure 5 reproduit un exemple de diagramme d'équilibre des phases du système cuivre-zinc ;
- la figure 6 est une vue en coupe transversale partielle d'un fil de l'art antérieur selon le document US 8,067,689 ;
- la figure 7 est une vue schématique en coupe transversale partielle d'un fil échantillon A selon l'exemple N°1 de la présente description ;
- la figure 8 est une vue schématique en coupe transversale partielle d'un fil échantillon B selon l'exemple N°2 de la présente invention ;
- la figure 9 est une vue schématique en coupe transversale partielle d'un fil échantillon E selon l'exemple N°5 de la présente invention ;
- la figure 10 est une vue schématique en coupe transversale partielle d'un fil échantillon F selon l'exemple N°6 de la présente invention ;
- la figure 11 est une photographie au microscope optique d'une section transversale du fil échantillon B selon la présente invention ;
- la figure 12 est une photographie au microscope optique d'une section longitudinale du fil échantillon B de la figure 11 ;
- la figure 13 est une photographie au microscope optique d'une section transversale d'un fil échantillon G de diamètre 0.25 mm selon la présente invention ;
- la figure 14 est une photographie au microscope optique d'une section longitudinale du fil échantillon G de la figure 13 ;
- la figure 15 est une photographie au microscope optique de la surface du fil échantillon G de la figure 13 ; et
- la figure 16 est une photographie au microscope optique d'une section transversale d'un fil échantillon G de diamètre 0.30 mm selon la présente invention.

DESCRIPTION DES MODES DE REALISATION PREFERES

Dans les modes de réalisation illustrés sur les figures, un fil électrode 1 pour usinage par électroérosion comprend une âme 2 métallique, revêtue d'un revêtement 3 d'épaisseur $E_3$ comprenant du laiton en phase γ fracturée.

Dans la réalisation illustrée sur la figure 2, l'âme 2 métallique comporte une couche unique de métal ou d'alliage métallique, par exemple un alliage à 63 % de cuivre et 37 % de zinc, ou un alliage à 80 % de cuivre et 20 % de zinc.

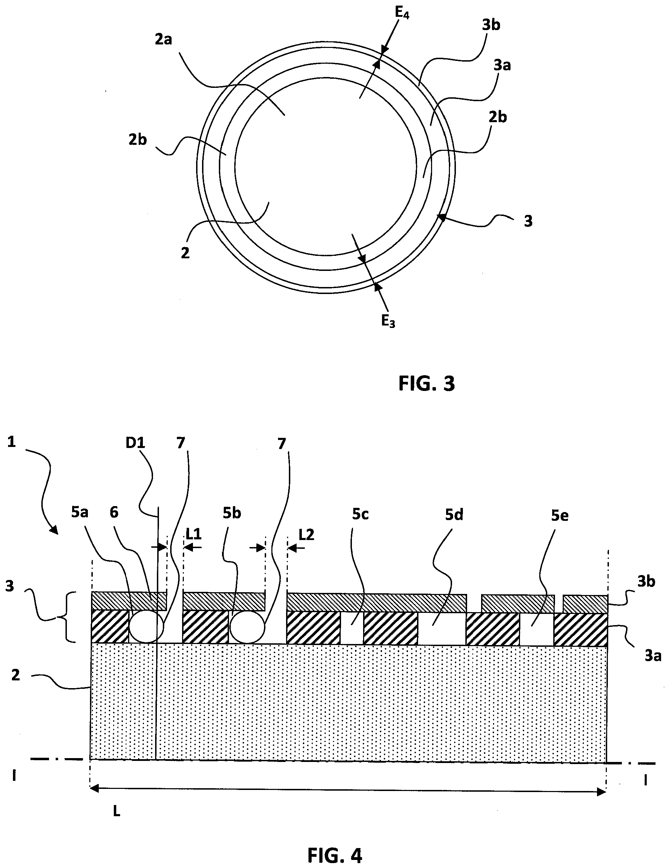

Dans la réalisation illustrée sur la figure 3, l'âme 2 métallique comporte deux couches de métal ou d'alliage métallique différentes, que l'on distingue par la présence d'un cœur métallique 2a, par exemple en laiton en phase α, et d'une couche intermédiaire 2b en alliage de cuivre et de zinc en phase β.

Dans cette même réalisation de la figure 3, le revêtement 3 comporte une couche interne 3a en alliage de cuivre et de zinc en phase γ fracturée c'est-à-dire sous forme de blocs, et comporte en outre une couche externe 3b d'épaisseur $E_4$ en zinc ou en alliage de zinc et de cuivre en phase ε.

On considère maintenant la figure 4, qui illustre, schématiquement et à plus grande échelle, une vue partielle en section longitudinale d'un tronçon de longueur L du fil électrode 1 de la figure 1, dans la région radiale du revêtement 3 qui recouvre l'âme 2.

Le revêtement 3, à structure fracturée, contient des pores couverts 5a, 5b, 5c, 5d et 5e.

La figure 4 permet d'illustrer la taille des pores couverts. On distingue par exemple, dans les pores couverts 5a et 5b, une cavité intérieure dans laquelle on peut tracer un cercle 7. Lorsque le cercle 7 vient au contact de parois opposées de la cavité, le diamètre du cercle 7 définit la taille du pore.

Les pores, par exemple le pore 5b, sont dits « couverts » car les droites radiales telles que la droite D1, partant de l'axe 1-1 du fil électrode et traversant ledit cercle 7, ne sort du fil qu'après avoir de nouveau traversé de la matière solide 6. De façon similaire, on dira que le pore est « couvert » lorsque ledit cercle 7 est couvert par de la matière solide 6.

Dans l'illustration de la figure 4, les pores 5c, 5d et 5e sont totalement couverts, en ce sens qu'aucune droite radiale les traversant ne sort du fil sans avoir traversé à nouveau de la matière solide. Autrement dit, une observation de la surface extérieure du fil électrode selon une direction radiale ne permet pas de distinguer la cavité intérieure constituant le volume du pore. Par contre, les pores 5a et 5b sont couverts mais seulement partiellement, en ce sens que des droites radiales les traversant dans les espaces illustrés par les longueurs L1 et L2 peuvent sortir du pore sans traverser de nouveau de la matière solide. Autrement dit, une observation de la surface extérieure du fil électrode selon une direction radiale permet alors de distinguer au moins en partie la cavité intérieure constituant le volume du pore 5a ou 5b.

La figure 4 permet d'illustrer également le taux de couverture longitudinale Tc selon lequel le revêtement 3 recouvre l'âme 2 métallique. Dans la section longitudinale de fil observée, de longueur totale L, la longueur de l'âme 2 non recouverte par le revêtement 3 est égale à la somme des longueurs L1 et L2 des espaces selon lesquels des droites radiales traversant les pores 5a et 5b peuvent sortir du pore sans traverser de la matière solide. Le taux de couverture Tc est alors défini par la formule :

$$Tc = [(\text{longueur totale}) - (\text{longueur découverte})] / (\text{longueur totale}) = 1 - (L1 + L2)/L$$

On va maintenant décrire plusieurs exemples de réalisation de tels fils électrodes comportant des pores couverts.

Dans tous ces exemples, les étapes de tréfilage ont été réalisées en injectant dans les filières de tréfilage une émulsion de 5 % à 10 % en volume d'huile dans de l'eau. Les étapes de traitement thermique ont été réalisées en atmosphère libre, sans précautions particulières pour éviter la présence d'oxydes en surface externe du fil électrode.

Exemple N° 1

Dans ce premier exemple, le fil électrode (échantillon A) a été réalisé selon le procédé suivant :

- prendre une âme de laiton à 63 % de cuivre et 37 % de zinc, de diamètre 1.25 mm,
- déposer une première couche de zinc de 6 $\mu$m d'épaisseur sur cette âme,
- tréfiler en 0.46 mm,
- faire un traitement thermique de diffusion pour obtenir une couche externe en laiton en phase $\gamma$, d'environ 4 $\mu$m d'épaisseur ; en pratique, le traitement thermique peut-être d'environ 6 heures à 180 °C,
- tréfiler en 0.30 mm : la phase $\gamma$ se fracture en blocs d'environ 5 $\mu$m, en laissant des vides entre lesdits blocs,
- déposer une couche de zinc d'environ 2 $\mu$m d'épaisseur,
- tréfiler en 0.25 mm.

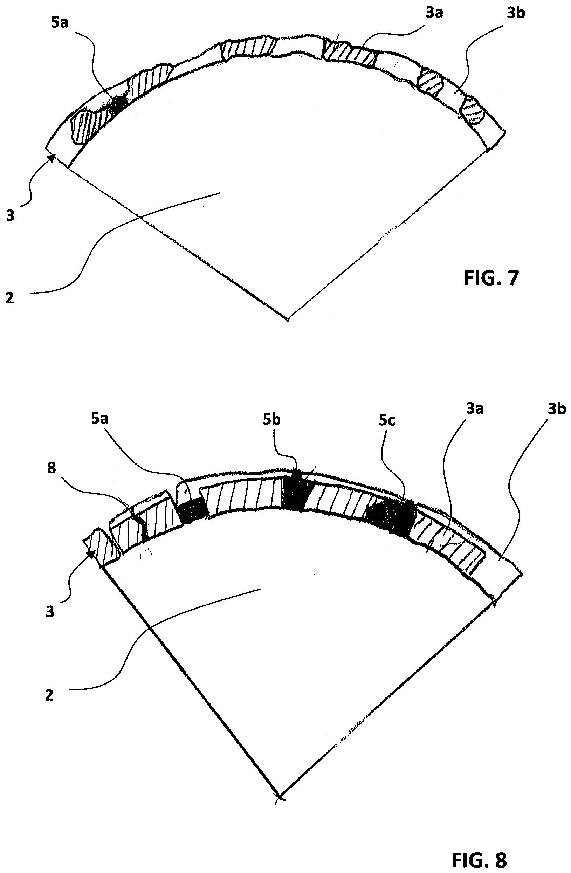

La figure 7 illustre de façon schématique en coupe transversale partielle un tel fil échantillon A.

On a constaté que, dans un tel fil A, des pores couverts 5a sont observables dans des sections transversales du fil. En effet, dans le revêtement 3 recouvrant l'âme 2, le zinc ductile de la couche externe 3b n'a que partiellement rempli les vides présents entre les blocs de la couche 3a de laiton en phase $\gamma$. Cependant, les pores couverts 5a sont en faible nombre, et de petite taille (inférieure à 2 $\mu$m environ).

Par un traitement thermique ultérieur à basse température (environ 60 °C pendant 48 heures), on a réalisé un fil (échantillon A') dans lequel la couche externe 3b de zinc couvrant les pores 5a a été convertie par diffusion en laiton en phase $\varepsilon$, sans que l'âme 2 soit recristallisée, et sans faire disparaître les pores couverts.

Exemple N° 2

Dans ce second exemple, le fil électrode (échantillon B) a été réalisé selon le procédé suivant :

- prendre une âme de laiton à 63 % de cuivre et 37 % de zinc, de diamètre 1.25 mm,
- déposer une première couche de zinc de 20 μm d'épaisseur sur cette âme,
- tréfiler en 0.30 mm,
- faire un traitement thermique de diffusion à 180 °C pendant 2 heures pour transformer partiellement la couche externe de zinc en une couche en laiton en phase γ de 6 μm ; le revêtement comprend alors une couche de laiton en phase γ proche de l'âme, et une couche externe de laiton en phase ε de 5 μm,
- tréfiler en 0.25 mm.

La figure 8 illustre de façon schématique en coupe transversale partielle un tel fil échantillon B.

On a constaté que, dans un tel fil B, des pores couverts 5a, 5b, 5c sont observables dans des sections transversales du fil. Dans le revêtement 3 recouvrant l'âme 2 du fil, la phase γ de la couche 3a s'est fracturée en blocs pendant le second tréfilage. La couche externe 3b en phase ε n'a que très partiellement rempli les vides créés entre les blocs de la couche 3a en phase γ, laissant subsister des pores couverts 5a, 5b, 5c plus nombreux et plus gros (pouvant dépasser 4 μm). Le taux de couverture longitudinale était supérieur à 90 %.

Par un traitement thermique ultérieur à basse température (à une température d'environ 180 °C pendant 4 heures), la couche externe 3b en phase ε couvrant les pores peut être convertie en laiton en phase γ, sans que l'âme 2 soit recristallisée, et sans faire disparaître les pores couverts 5a, 5b, 5c.

Sur cette figure 8, on a illustré schématiquement une fissure 8, qui se distingue nettement des pores couverts selon la présente invention par sa forme et son volume, et qui débouche à la surface du fil.

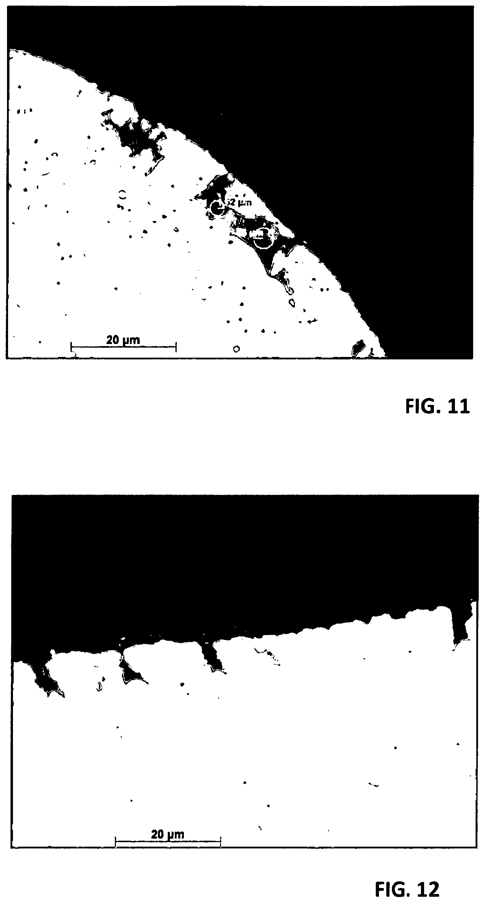

Les photographies des figures 11 et 12 illustrent la présence de pores couverts respectivement dans une section longitudinale et une section transversale du fil B.

Exemple N° 3

Dans ce troisième exemple, le fil électrode (échantillon C) a été réalisé selon le procédé suivant :

- prendre une âme de laiton à 80 % de cuivre et 20 % de zinc, de diamètre 1.20 mm,
- déposer une première couche de zinc de 30 μm d'épaisseur sur cette âme,
- réaliser un premier traitement thermique de 20 heures à 385 °C pour obtenir : une sous-couche en phase β d'environ 60 μm d'épaisseur, et une couche externe en phase γ d'environ 15 μm d'épaisseur,
- tréfiler en 0.62 mm ; la phase γ se fracture,
- réaliser un revêtement de 3 μm de zinc sur la phase γ fracturée préalablement dégraissée et désoxydée,
- tréfiler en 0.25 mm,
- réaliser un traitement thermique de 5 heures à 130 °C.

Le zinc de surface a été transformé en laiton en phase ε.

On a constaté que, dans un tel fil C, le taux de couverture longitudinale qui a été obtenu était de 90 % environ. Des pores couverts sont observables dans des sections transversales du fil. Certains de ces pores peuvent avoir une taille supérieure à 3 μm. On observe en moyenne plus de 3 pores couverts par section transversale complète du fil.

Exemple N° 4

Dans ce quatrième exemple, le fil électrode (échantillon D) a été réalisé selon le procédé suivant :

- prendre une âme de laiton à 80 % de cuivre et 20 % de zinc, de diamètre 1.20 mm,
- déposer une première couche de zinc de 38 μm d'épaisseur sur cette âme,
- réaliser un premier traitement thermique de 22 heures à 395 °C pour obtenir : une sous-couche en phase β d'environ 76 μm d'épaisseur, et une couche externe en phase γ d'environ 15 μm d'épaisseur,
- tréfiler en 0.62 mm ; la phase γ se fracture,
- réaliser un second traitement thermique de 7 heures à 327 °C ; on obtient une couche de laiton en phase β de 39 μm d'épaisseur, et une couche de 8 μm de blocs de laiton en phase γ fracturée contenant aussi de la phase β,
- réaliser un revêtement de 6.5 μm de zinc sur la phase γ fracturée préalablement dégraissée et désoxydée,
- tréfiler en 0.42 mm,
- réaliser un troisième traitement thermique de 32 heures à 145 °C, à l'issue duquel on obtient un revêtement comprenant une couche intérieure de laiton en phase β de 16 μm d'épaisseur et une couche de laiton en phase γ de 14 μm d'épaisseur,
- tréfiler en 0.25 mm.

On a constaté que, dans un tel fil D, le taux de couverture longitudinale qui a été obtenu était de 86 % environ. Des pores couverts sont observables dans des sections transversales du fil. Certains de ces pores peuvent avoir une taille supérieure à 4 $\mu$m. On observe en moyenne plus de 5 pores couverts de taille supérieure à 2 $\mu$m par section transversale complète du fil.

Exemple N° 5

Dans ce cinquième exemple, le fil électrode (échantillon E) a été réalisé selon le procédé suivant :

- prendre un fil de laiton à 63 % de cuivre et 37 % de zinc, de diamètre 1.25 mm,
- déposer une première couche de zinc de 14 $\mu$m d'épaisseur sur cette âme,
- tréfiler ce fil à 0.827 mm,
- soumettre l'ébauche ainsi obtenue à un traitement thermique de diffusion jusqu'à ce que le revêtement ne comporte plus de zinc en surface ; en pratique, le traitement thermique peut être de 4 heures à 180 °C ; on obtient une couche d'environ 13 $\mu$m de laiton en phase $\gamma$, et une couche superficielle de laiton en phase $\varepsilon$ d'environ 7 $\mu$m d'épaisseur, sans trace de zinc,
- tréfiler en 0.25 mm.

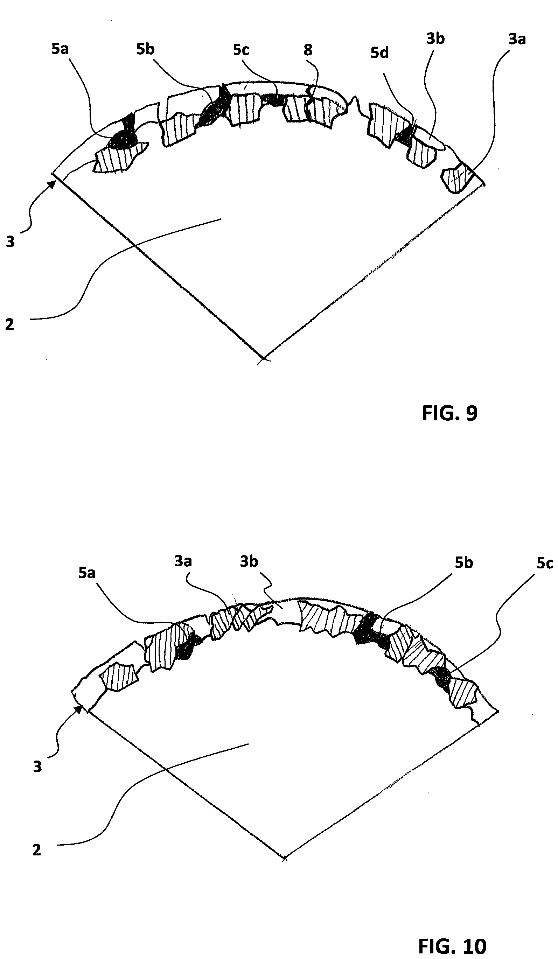

La figure 9 illustre de façon schématique en coupe transversale partielle un tel fil échantillon E.

On a constaté que, dans un tel fil E, le taux de couverture longitudinale qui a été obtenu était de 86 % environ. La couche 3a de laiton en phase $\gamma$ est fracturée, comportant des blocs de laiton d'épaisseur variable pouvant atteindre 12 $\mu$m. Des pores couverts 5a, 5b, 5c, 5d sont observables dans des sections transversales du fil. Certains de ces pores peuvent avoir une taille supérieure à 4 $\mu$m. On observe en moyenne, dans le revêtement 3 couvrant l'âme 2, plus de 5 pores couverts de taille supérieure à 2 $\mu$m par section transversale complète du fil.

Sur cette figure 9, on a illustré schématiquement une fissure 8, qui se distingue nettement des pores couverts selon la présente invention par sa forme et son volume, et qui débouche à la surface du fil.

Exemple NO° 6

Dans ce sixième exemple, le fil électrode (échantillon F) a été réalisé selon le procédé suivant :

- prendre une âme de laiton à 63 % de cuivre et 37 % de zinc, de diamètre 1.25 mm,
- déposer une première couche de zinc de 20 $\mu$m d'épaisseur sur cette âme,
- tréfiler en 0.827 mm,
- réaliser un premier traitement thermique de 5 heures à 180 °C pour obtenir : une sous-couche d'alliage de cuivre et de zinc en phase $\gamma$ d'environ 15 $\mu$m d'épaisseur, une couche intermédiaire d'alliage de cuivre et de zinc en phase $\varepsilon$ d'environ 6 $\mu$m, et une couche externe d'alliage de cuivre et de zinc faiblement allié en phase $\eta$ d'environ 6 $\mu$m d'épaisseur, - tréfiler en 0.25 mm ; la phase $\gamma$ se fracture, et le revêtement recouvrant l'âme est un mélange de bloc d'alliage de cuivre et de zinc en phase $\gamma$, avec, entre les blocs, des pores couverts par un mélange d'alliages de cuivre et de zinc en phase $\varepsilon$ et en phase $\eta$.

La figure 10 illustre de façon schématique en coupe transversale partielle un tel fil échantillon F.

On a constaté que, dans un tel fil F, le taux de couverture longitudinale qui a été obtenu était supérieur à 90 % environ. Des pores couverts 5a, 5b, 5c sont observables dans des sections transversales du fil. Certains de ces pores peuvent avoir une taille supérieure à 4 $\mu$m. On observe en moyenne plus de 5 pores couverts de taille supérieure à 2 $\mu$m par section transversale complète du fil.

Par un traitement thermique ultérieur à basse température (environ 60 °C pendant 48 heures), on a réalisé un fil (échantillon F') dans lequel la couche externe 3b de zinc couvrant les pores a été convertie par diffusion en laiton en phase $\varepsilon$, sans que l'âme 2 soit recristallisée, et sans faire disparaître les pores couverts 5a, 5b, 5c.

Par un second traitement thermique ultérieur à environ 180 °C pendant 2 heures, on a réalisé un fil (échantillon F") dans lequel la couche externe 3b d'alliage de cuivre et de zinc en phase $\varepsilon$ couvrant les pores a été convertie par diffusion en alliage de cuivre et de zinc en phase $\gamma$, sans que l'âme 2 soit recristallisée, et sans faire disparaître les pores couverts 5a, 5b, 5c.

Exemple N° 7

Dans ce septième exemple, le fil électrode (échantillon G) a été réalisé selon le procédé suivant :

- prendre un fil de laiton à 60 % de cuivre et 40 % de zinc, de diamètre 1.20 mm,
- déposer une couche de zinc de 13 $\mu$m d'épaisseur sur cette âme,
- tréfiler ce fil à 0.464 mm, l'épaisseur de la couche de zinc étant alors de 5 $\mu$m,
- soumettre l'ébauche ainsi obtenue à un traitement thermique de diffusion comprenant une montée en température en 4 heures à partir de la température ambiante jusqu'à un palier de 11 heures à 140°C suivi d'une descente en température en 5 heures jusqu'à la température ambiante ; le revêtement comporte alors une couche intérieure d'environ 6 $\mu$m de laiton en phase $\gamma$, et une

couche superficielle de laiton en phase $\varepsilon$ d'environ 2 $\mu$m d'épaisseur, sans trace de zinc, - tréfiler progressivement jusqu'à un diamètre final, par exemple en utilisant 5 filières successives jusqu'à un diamètre final de 0.30 mm, ou en utilisant 8 filières successives jusqu'à un diamètre final de 0.25 mm, ou en utilisant 10 filières successives jusqu'à un diamètre final de 0.20 mm.

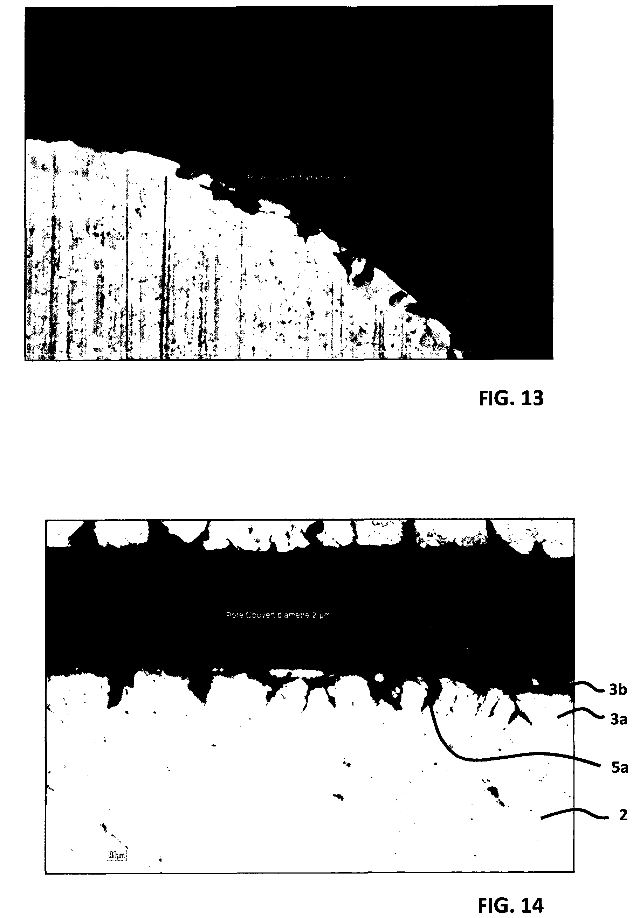

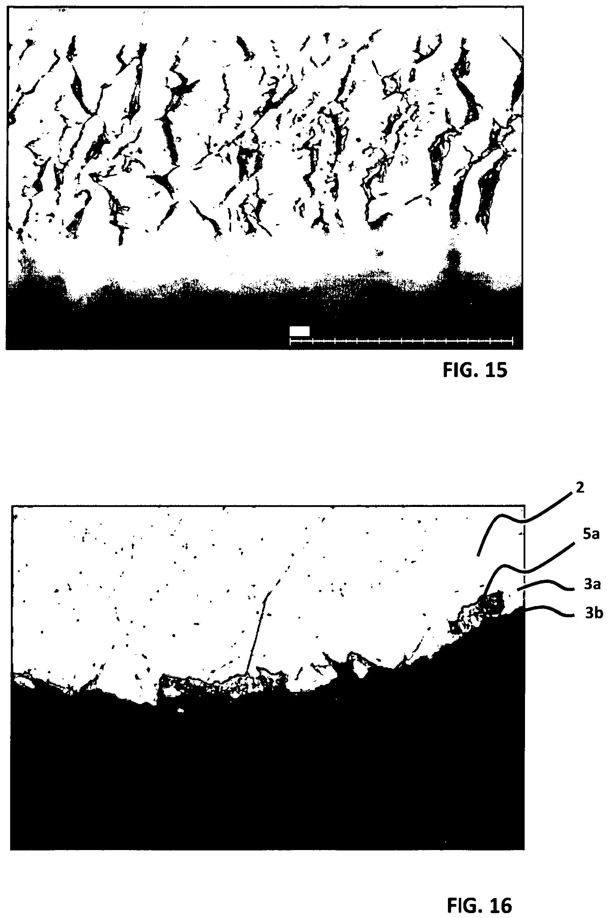

Les figures 13, 14 et 15 sont des photographies au microscope optique d'un fil échantillon G de diamètre 0.25 mm, respectivement en section transversale, en coupe longitudinale, et en vue de surface. La figure 16 est une photographie au microscope optique d'un fil échantillon G de diamètre 0.30 mm en section transversale. On a repéré, sur ces photographies, l'âme 2, la couche interne 3a en alliage de cuivre et de zinc en phase gamma fracturée, la couche externe 3b en alliage de cuivre de zinc en phase $\varepsilon$, et des pores couverts 5a.

On a constaté que, dans un tel fil G, le taux de couverture longitudinale qui a été obtenu était de 88 % environ lorsque le diamètre du fil électrode est de 0.30 mm. Le taux de couverture longitudinale était de 77 % environ lorsque le diamètre du fil électrode est de 0.25 mm. Le taux de couverture longitudinale était de 66 % environ lorsque le diamètre du fil électrode et de 0.20 mm. La couche de laiton en phase $\gamma$ est fracturée, comportant des blocs de laiton d'épaisseur sensiblement constante. Des pores couverts 5a sont observables dans des sections du fil. Certains de ces pores ont une taille supérieure à 2 $\mu$m. On observe en moyenne, dans le revêtement couvrant l'âme, plus de 5 pores couverts de taille supérieure à 2 $\mu$m par section transversale complète du fil électrode.

L'échantillon B du second exemple, et l'échantillon G du septième exemple, sont obtenus par des procédés particulièrement adaptés pour une production industrielle, car un seul traitement thermique est nécessaire. Dans le cas de l'échantillon G, ce traitement thermique est réalisé sur un diamètre de fil nettement plus grand que le diamètre final, ce qui est encore plus favorable dans une production industrielle.

Essais

On a réalisé des essais comparatifs d'usinage mettant en évidence l'effet avantageux de la présente invention.

Les essais d'usinage ont été effectués avec les fils électrodes A, A', B, C, D, E, F, F', F" et G, dont la fabrication est décrite ci-dessus, en les comparant avec :

- un fil (échantillon LA) de 0.25 mm de diamètre en laiton nu à 63 % de cuivre et 37 % de zinc,
- un fil (échantillon T) de 0.25 mm de diamètre ayant une âme en alliage de cuivre et de zinc à 63 % de cuivre et 37 % de zinc, un revêtement couvrant pratiquement 100 % de la surface de l'âme et comprenant des blocs d'alliage de cuivre et de zinc en phase $\gamma$ fracturée dont les blocs sont noyés dans une matrice en alliage de cuivre et de zinc en phase $\varepsilon$ qui remplit les interstices entre les blocs de phase $\gamma$ ; ce fil est tel que décrit dans le document US 8,067,689 B2 selon le mode de réalisation à phase $\varepsilon$,
- un fil (échantillon SD2) de 0.25 mm de diamètre ayant une âme en alliage de cuivre et de zinc à 63 % de cuivre et 37 % de zinc, un revêtement ayant une sous-couche en alliage de cuivre et de zinc en phase $\beta$ et une couche externe en alliage de cuivre et de zinc en phase $\gamma$ fracturée, c'est-à-dire ayant des pores ouverts,
- un fil (échantillon SE) de 0.25 mm de diamètre ayant une âme en alliage de cuivre et de zinc à 80 % de cuivre et 20 % de zinc, un revêtement ayant une sous-couche en alliage de cuivre et de zinc en phase $\beta$ et une couche externe en alliage de cuivre et de zinc en phase $\gamma$ fracturée, c'est-à-dire ayant des pores ouverts,
- un fil (échantillon SA) de 0.25 mm de diamètre ayant une âme en alliage de cuivre et de zinc à 63 % de cuivre et 37 % de zinc, un revêtement en alliage de cuivre et de zinc en phase $\gamma$ fracturé à blocs d'alliage d'épaisseur sensiblement constante et laissant apparaître l'âme dans les fractures, c'est-à-dire ayant des pores ouverts.

Tous les essais d'usinage ont été effectués en utilisant une machine GFMS P350, sur une pièce en acier de hauteur 50 mm, avec des buses décollées de 4.4 mm en bas et 5.0 mm en haut, avec une technologie AC CUT VS+ 0.25 mm (ACO=0), avec I changé de 17 à 18, P changé de 54 à 45 pour avoir environ 10 A de courant d'usinage, et avec FW changé de 17 à 10.

En ce qui concerne les essais comparatifs pour évaluer la production de poudre lors d'un usinage, on a fait passer une longueur de fil d'environ 1000 m linéaires, tendue à 10 N, dans un guide fil en céramique de machine d'électroérosion, on a recueilli la poudre sous le guide fil sur une surface adhésive, et on a comparé les quantités de poudre déposées. La comparaison était essentiellement optique, à l'œil nu, en retenant cinq seuils de quantité, à savoir une quantité indétectable, une quantité très faible, une quantité moyenne, une quantité forte, et une quantité très forte. L'étalon de quantité est obtenu avec les fils SA, SD2 et SE, qui sont des fils produits en grande série et commercialisés par le demandeur depuis plusieurs années. Le fil SA ne produit qu'une quantité indétectable de poudre lors d'un usinage en machine d'électroérosion. Les fils SD2 et SE donnent entière satisfaction grâce au fait qu'ils ne produisent qu'une quantité très faible de poudre lors d'un usinage en machine d'électroérosion.

Les résultats figurent dans le tableau ci-après.

| Fil | Vitesse d'usinage (mm$^2$/mn) | Quantité de poudre | Etat de surface |
|---|---|---|---|
| Fil LA | 83.8 | moyenne | |
| Fil SD2 | 99.8 | très faible | |
| Fil SE | 106.6 | très faible | |
| Fil SA | 90 | indétectable | excellent (0.16 $\mu$m) |
| Fil T | 96.0 | très forte | 0.20 $\mu$m |
| Fil A | 94.2 | moyenne | |
| Fil A' | 96.0 | moyenne | |
| Fil B | 100.3 | très faible | bon (0.20 $\mu$m) |
| Fil C | 107.1 | forte | |
| Fil D | 110.1 | très faible | |
| Fil E | 101.9 | moyenne | médiocre |
| Fil F | 97.0 | très faible | médiocre |
| Fil F' | 108 | | médiocre |
| Fil F" | 110 | forte | médiocre |
| Fil G (0.25 mm) | 95 | indétectable | excellent (0.15 $\mu$m) |

Les pores couverts des fils A et A' sont apparemment de taille trop petite pour qu'un effet avantageux soit constaté sur la vitesse d'usinage par rapport notamment au fil SD2.

Cependant, la comparaison des vitesses d'usinage des fils A et A' démontre l'intérêt de la phase ε par rapport au zinc pur ou en phase η.

On constate, en considérant les fils B et E à pores couverts de taille suffisante, une augmentation de la vitesse d'usinage en ébauche par rapport à des fils ayant une même structure d'âme en laiton CuZn37 et ayant un revêtement à pores ouverts ou à pores couverts de petite taille (fils SD2, A, A').

En particulier, le fil E, qui a été réalisé en déposant la même quantité de zinc que le fil A', démontre l'intérêt de la présence de pores couverts de plus de 4 $\mu$m dans le revêtement. Le fil A' n'a, en comparaison avec le fil E, que des pores dont le diamètre est inférieur à 2 $\mu$m.

Le fil B a permis d'atteindre de faibles rugosités en finition, de l'ordre de 0.20 $\mu$m de Ra. Il fait peu de poudre quand il passe dans les guides fil de la machine. Le fil B démontre que, pour concilier une grande vitesse d'usinage, une faible rugosité, et un faible dégagement de poudre, on peut avantageusement réaliser des pores couverts de plus de 4 $\mu$m recouverts d'alliage de cuivre et de zinc en phase ε entre des blocs fracturés d'épaisseur régulière d'alliage de cuivre et de zinc en phase γ. En comparaison du fil SD2, dont l'âme présente la même composition, le fil B démontre l'intérêt de la présence de pores couverts de grande taille.

On constate, en considérant le fil D à pores couverts de taille suffisante, une augmentation de la vitesse d'usinage en ébauche par rapport à des fils ayant une même structure d'âme en laiton CuZn20 et ayant un revêtement à pores ouverts (fil SE).

Le fil F a une vitesse d'usinage relativement faible, malgré la présence de la couche de revêtement en phase γ fracturée, de la phase ε, et de pores couverts. La présence de zinc en phase η semble être à l'origine de ce résultat.

En comparaison avec le fil F, le fil F' démontre l'intérêt d'avoir des pores couverts de plus de 3 $\mu$m dans un revêtement en alliage de cuivre et de zinc en phase ε dépourvu de phase η.

Le fil G a permis d'atteindre de très faibles rugosités en finition. La quantité de poudre produite quand il passe dans les guides fil de la machine est pratiquement indétectable. Le fil G démontre que, pour concilier une grande vitesse d'usinage, une très faible rugosité, et un dégagement de poudre pratiquement indétectable, on peut avantageusement réaliser des pores couverts de plus de 2 $\mu$m recouverts d'alliage de cuivre et de zinc en phase $\varepsilon$ entre des blocs fracturés d'épaisseur régulière d'alliage de cuivre et de zinc en phase $\gamma$. En comparaison du fil SA, qui présente la même structure à blocs fracturés d'épaisseur régulière d'alliage de cuivre et de zinc en phase $\gamma$, le fil G démontre l'intérêt de la présence de pores couverts pour augmenter la vitesse d'usinage.

La présente invention n'est pas limitée aux modes de réalisation qui ont été explicitement décrits, mais elle en inclut les diverses variantes et généralisations contenues dans le domaine des revendications ci-après.

**Revendications**

1.   - Fil électrode (1) pour usinage par électroérosion, ledit fil électrode (1) comprenant :

- une âme (2) métallique, en une ou plusieurs couches de métal ou d'alliage métallique,
- sur l'âme (2) métallique, un revêtement (3) ayant un alliage différent de celui de l'âme (2) métallique et contenant plus de 50 % en poids de zinc ,

dans lequel :

- le revêtement (3) comprend de l'alliage cuivre-zinc (3a) en phase $\gamma$ fracturée,
- le revêtement (3) contient des pores couverts (5a, 5b, 5c, 5d, 5e) ayant une taille supérieure à 2 Z $\mu$m,

**caractérisé en ce que** :

- tout ou partie des pores (5a, 5b, 5c, 5d, 5e) sont couverts par un ou plusieurs alliages de cuivre et de zinc (3b) à plus de 58 % et moins de 100 % de zinc en poids.

2.   - Fil électrode selon la revendication 1, **caractérisé en ce que** le revêtement (3) recouvre l'âme (2) métallique selon un taux de couverture supérieur à 85 % lorsque le diamètre du fil électrode est de 0.30 mm environ, selon un taux de couverture supérieure à 75 % lorsque le diamètre du fil électrode est de 0.25 mm environ, selon un taux de couverture supérieure à 65 % lorsque le diamètre du fil électrode est de 0.20 mm environ.

3.   - Fil électrode selon l'une des revendications 1 ou 2, **caractérisé en ce que** le revêtement (3) recouvre l'âme (2) métallique selon un taux de couverture supérieur à 85 % lorsque le diamètre du fil électrode est de 0.25 mm.

4.   - Fil électrode selon l'une quelconque des revendications 1 à 3, **caractérisé en ce que** tout ou partie des pores (5a, 5b, 5c, 5d, 5e) sont couverts par un ou plusieurs alliages de cuivre et de zinc (3b) à plus de 78 % et moins de 100 % de zinc en poids.

5.   - Fil électrode selon l'une quelconque des revendications 1 à 4, **caractérisé en ce que** tout ou partie des pores (5a, 5b, 5c, 5d, 5e) sont couverts par un mélange (3b) d'alliages de cuivre et de zinc en phase $\varepsilon$ et en phase $\eta$.

6.   - Fil électrode selon l'une quelconque des revendications 1 à 5, **caractérisé en ce que** le revêtement (3) comprend en moyenne, dans chaque section transversale complète du fil électrode, au moins 3 pores couverts (5a, 5b, 5c, 5d, 5e) ayant une taille supérieure à 2 $\mu$m.

7.   - Fil électrode selon l'une quelconque des revendications 1 à 5, **caractérisé en ce que** le revêtement (3) comprend en moyenne, dans chaque section transversale complète du fil électrode, au moins 5 pores couverts (5a, 5b, 5c, 5d, 5e) ayant une taille supérieure à 2 $\mu$m.

8.   - Fil électrode selon l'une quelconque des revendications 1 à 7, **caractérisé en ce que** le revêtement (3) contient des pores couverts (5a, 5b, 5c, 5d, 5e) ayant une taille supérieure à 3 $\mu$m.

9.   - Fil électrode selon l'une quelconque des revendications 1 à 8, **caractérisé en ce que** le revêtement (3) contient des pores couverts (5a, 5b, 5c, 5d, 5e) ayant une taille supérieure à 4 $\mu$m.

10.  - Fil électrode selon l'une quelconque des revendications 1 à 9, **caractérisé en ce que** l'âme (2) comporte un cœur métallique (2a) et une couche intermédiaire (2b) en alliage de cuivre et de zinc en phase $\beta$.

**11.** - Fil électrode selon la revendication 10, **caractérisé en ce que** le cœur (2a) est en cuivre ou en alliage de cuivre.

**12.** - Procédé de fabrication d'un fil électrode selon l'une quelconque des revendications 1 à 11, comprenant la succession des étapes :

- prendre une âme de laiton à 63 % de cuivre et 37 % de zinc, de diamètre 1.25 mm,
- déposer une première couche de zinc de 20 $\mu$m d'épaisseur sur cette âme,
- tréfiler en 0.30 mm,
- faire un traitement thermique de diffusion à 180 °C pendant 2 heures pour transformer partiellement la couche externe de zinc en une couche en laiton en phase $\gamma$ ; le revêtement comprend alors une couche en phase $\gamma$ proche de l'âme, et une couche externe en phase $\varepsilon$,
- tréfiler en 0.25 mm.

**13.** - Procédé de réalisation d'un fil électrode selon l'une quelconque des revendications 1 à 11, comprenant les étapes :

- prendre une âme de laiton à 80 % de cuivre et 20 % de zinc, de diamètre 1.20 mm,
- déposer une première couche de zinc de 30 $\mu$m d'épaisseur sur cette âme,
- réaliser un premier traitement thermique de 20 heures à 385 °C pour obtenir : une sous-couche en phase $\beta$ d'environ 60 $\mu$m d'épaisseur, et une couche externe en phase $\gamma$ d'environ 15 $\mu$m d'épaisseur,
- tréfiler en 0.62 mm ; la phase $\gamma$ se fracture,
- réaliser un revêtement de 3 $\mu$m de zinc sur la phase $\gamma$ fracturée préalablement dégraissée et désoxydée,
- tréfiler en 0.25 mm,
- réaliser un traitement thermique de 5 heures à 130 °C.

**14.** - Procédé de réalisation d'un fil électrode selon l'une quelconque des revendications 1 à 11, comprenant les étapes :

- prendre une âme de laiton à 80 % de cuivre et 20 % de zinc, de diamètre 1.20 mm,
- déposer une première couche de zinc de 38 $\mu$m d'épaisseur sur cette âme,
- réaliser un premier traitement thermique de 22 heures à 395 °C pour obtenir : une sous-couche en phase $\beta$ d'environ 76 $\mu$m d'épaisseur, et une couche externe en phase $\gamma$ d'environ 15 $\mu$m d'épaisseur,
- tréfiler en 0.62 mm ; la phase $\gamma$ se fracture,
- réaliser un second traitement thermique de 7 heures à 327 °C ; on obtient une couche de laiton en phase $\beta$ de 39 $\mu$m d'épaisseur, et une couche de 8 $\mu$m de blocs de laiton en phase $\gamma$ fracturée contenant aussi de la phase $\beta$,
- réaliser un revêtement de 6.5 $\mu$m de zinc sur la phase $\gamma$ fracturée préalablement dégraissée et désoxydée,
- tréfiler en 0.42 mm,
- réaliser un troisième traitement thermique de 32 heures à 145 °C, à l'issue duquel on obtient un revêtement comprenant une couche intérieure de laiton en phase $\beta$ de 16 $\mu$m d'épaisseur et une couche superficielle de laiton en phase $\gamma$ de 14 $\mu$m d'épaisseur,
- tréfiler en 0.25 mm.

**15.** - Procédé de réalisation d'un fil électrode selon l'une quelconque des revendications 1 à 11, comprenant les étapes :

- prendre un fil de laiton à 60 % de cuivre et 40 % de zinc, de diamètre 1.20 mm,
- déposer une couche de zinc de 13 $\mu$m d'épaisseur sur cette âme,
- tréfiler ce fil à 0.464 mm, l'épaisseur de la couche de zinc étant alors de 5 $\mu$m,
- soumettre l'ébauche ainsi obtenue à un traitement thermique de diffusion comprenant une montée en température en 4 heures à partir de la température ambiante jusqu'à un palier de 11 heures à 140°C suivi d'une descente en température en 5 heures jusqu'à la température ambiante ; le revêtement comporte alors une couche intérieure d'environ 6 $\mu$m de laiton en phase $\gamma$, et une couche superficielle de laiton en phase $\varepsilon$ d'environ 2 $\mu$m d'épaisseur, sans trace de zinc,
- tréfiler progressivement jusqu'à un diamètre final, ledit diamètre final étant avantageusement de 0.20 mm, de 0.25 mm ou de 0.30 mm.

**Patentansprüche**

**1.** Elektrodendraht (1) zur Bearbeitung durch Funkenerosion, wobei besagter Elektrodendraht (1) umfasst:

- einen metallischen Kern (2), mit einer oder mehreren Schichten aus Metall oder metallischer Legierung,
- auf dem metallischen Kern (2) eine Beschichtung (3), aufweisend eine andere Legierung als die des metallischen Kerns (2), und enthaltend mehr als 50 Gew.-% Zink,

in welchem:

- die Beschichtung (3) die Kupfer-Zink-Legierung (3a) in der gebrochenen $\gamma$-Phase umfasst,
- die Beschichtung (3) bedeckte Poren (5a, 5b, 5c, 5d, 5e) enthält, aufweisend eine Ausdehnung größer als 2 $\mu$m,

**dadurch gekennzeichnet, dass:**

- alle oder ein Teil der Poren (5a, 5b, 5c, 5d, 5e) mit einer oder mehreren Legierungen mit Kupfer und Zink (3b) mit mehr als 58 Gew.-% und weniger als 100 Gew.-% Zink bedeckt sind.

2. Elektrodendraht gemäß Anspruch 1, **dadurch gekennzeichnet, dass** die Beschichtung (3) den metallischen Kern (2) gemäß einer Bedeckungsrate größer als 85 % überzieht, wenn der Durchmesser des Elektrodendrahtes etwa 0,30 mm ist, gemäß einer Bedeckungsrate größer als 75 %, wenn der Durchmesser des Elektrodendrahts etwa 0,25 mm ist, mit einer Bedeckungsrate größer als 65 %, wenn der Durchmesser des Elektrodendrahts etwa 0,20 mm ist.

3. Elektrodendraht gemäß einem der Ansprüche 1 oder 2, **dadurch gekennzeichnet, dass** die Beschichtung (3) den metallischen Kern (2) gemäß einer Bedeckungsrate größer als 85 % überzieht, wenn der Durchmesser des Elektrodendrahts 0,25 mm ist.

4. Elektrodendraht gemäß einem der Ansprüche 1 bis 3, **dadurch gekennzeichnet, dass** alle oder ein Teil der Poren (5a, 5b, 5c, 5d, 5e) durch eine oder mehrere Legierungen mit Kupfer und Zink (3b) mit mehr als 78 Gew.-% und weniger als 100 Gew.-% Zink bedeckt sind.

5. Elektrodendraht gemäß einem der Ansprüche 1 bis 4, **dadurch gekennzeichnet, dass** alle oder ein Teil der Poren (5a, 5b, 5c, 5d, 5e) durch eine Mischung (3b) aus Legierungen mit Kupfer und Zink in Phase $\varepsilon$ und in Phase $\eta$ bedeckt sind.

6. Elektrodendraht gemäß einem der Ansprüche 1 bis 5, **dadurch gekennzeichnet, dass** die Beschichtung (3) im Durchschnitt in jedem vollständigen Querschnitt des Elektrodendrahts, mindestens 3 bedeckte Poren (5a, 5b, 5c, 5d, 5e), aufweisend eine Ausdehnung größer als 2 $\mu$m, umfasst.

7. Elektrodendraht gemäß einem der Ansprüche 1 bis 5, **dadurch gekennzeichnet, dass** die Beschichtung (3) im Durchschnitt in jedem vollständigen Querschnitt des Elektrodendrahts, mindestens 5 bedeckte Poren (5a, 5b, 5c, 5d, 5e), aufweisend eine Ausdehnung größer als 2 $\mu$m, umfasst.

8. Elektrodendraht gemäß einem der Ansprüche 1 bis 7, **dadurch gekennzeichnet, dass** die Beschichtung (3) bedeckte Poren (5a, 5b, 5c, 5d, 5e) enthält, aufweisend eine Ausdehnung größer als 3 $\mu$m.

9. Elektrodendraht gemäß einem der Ansprüche 1 bis 8, **dadurch gekennzeichnet, dass** die Beschichtung (3) bedeckte Poren (5a, 5b, 5c, 5d, 5e) enthält, aufweisend eine Ausdehnung größer als 4 $\mu$m.

10. Elektrodendraht gemäß einem der Ansprüche 1 bis 9, **dadurch gekennzeichnet, dass** der Kern (2) einen metallischen Kern (2a) und eine Zwischenschicht (2b) in einer Legierung mit Kupfer und Zink in Phase $\beta$ aufweist.

11. Elektrodendraht gemäß Anspruch 10, **dadurch gekennzeichnet, dass** der Kern (2a) aus Kupfer oder aus einer Legierung mit Kupfer ist.

12. Verfahren zur Herstellung eines Elektrodendrahts gemäß einem der Ansprüche 1 bis 11 mit der Abfolge von Schritten:

- Nehmen eines Kerns mit Messing mit 63 % Kupfer und 37 % Zink, mit einem Durchmesser von 1,25 mm,
- Aufbringen einer ersten Schicht mit Zink mit einer Dicke von 20 $\mu$m auf diesen Kern,
- Drahtziehen in 0,30 mm,
- Durchführen einer thermischen Diffusionsbehandlung mit 180°C für 2 Stunden, um die externe Schicht mit Zink teilweise in eine Schicht aus Messing in Phase γ umzuwandeln; die Beschichtung umfasst dann eine Schicht in Phase γ in der Nähe des Kerns und eine externe Schicht in Phase ε,
- Drahtziehen in 0,25 mm.

**13.** Verfahren zur Herstellung eines Elektrodendrahtes nach einem der Ansprüche 1 bis 11, umfassend die Schritte:

- Nehmen eines Kerns aus Messing mit 80 % Kupfer und 20 % Zink, mit einem Durchmesser von 1,20 mm,
- Aufbringen einer ersten Schicht mit Zink mit einer Dicke von 30 μm auf diesen Kern,
- Realisieren einer ersten thermischen Behandlung für 20 Stunden mit 385°C, um zu erhalten: eine Unterschicht in β-Phase mit einer Dicke von etwa 60 μm und eine externe Schicht in Phase γ mit einer Dicke von etwa 15 μm,
- Drahtziehen in 0,62 mm; die Phase γ bricht,
- Realisieren einer Beschichtung von 3 μm Zink auf der vorab entfetteten und desoxidierten gebrochenen Phase γ,
- Drahtziehen in 0,25 mm,
- Realisieren einer thermischen Behandlung für 5 Stunden mit 130°C.

**14.** Verfahren zum Herstellen eines Elektrodendrahts nach einem der Ansprüche 1 bis 11, umfassend die Schritte:

- Nehmen eines Kerns aus Messing mit 80 % Kupfer und 20 % Zink, mit einem Durchmesser von 1,20 mm,
- Aufbringen einer ersten Schicht mit Zink mit einer Dicke von 38 μm auf diesen Kern,
- Realisieren einer ersten thermischen Behandlung für 22 Stunden mit 395°C, um zu erhalten: eine Unterschicht in β-Phase mit einer Dicke von etwa 76 μm und eine externe Schicht in Phase γ mit einer Dicke von etwa 15 μm,
- Drahtziehen in 0,62 mm; die Phase γ bricht,
- Realisieren einer zweiten thermischen Behandlung für 7 Stunden mit 327°C; man erhält eine Schicht mit Messing in β-Phase mit einer Dicke von 39 μm und eine Schicht von 8 μm mit Blöcken aus Messing in gebrochener Phase γ, enthaltend ebenfalls Phase β,
- Realisieren einer Beschichtung von 6,5 μm Zink auf der vorab entfetteten und desoxidierten gebrochenen Phase γ,
- Drahtziehen in 0,42 mm,
- Realisieren einer dritten thermischen Behandlung für 32 Stunden mit 145°C; als Ergebnis davon erhält man eine Beschichtung, umfassend eine interne Schicht mit Messing in β-Phase mit einer Dicke von 16 μm und eine Oberflächenschicht mit Messing in Phase γ mit einer Dicke von 14 μm
- Drahtziehen in 0,25 mm.

**15.** Verfahren zum Herstellen eines Elektrodendrahts nach einem der Ansprüche 1 bis 11, umfassend die Schritte:

- Nehmen eines Kerns aus Messing mit 60 % Kupfer und 40 % Zink, mit einem Durchmesser von 1,20 mm,
- Aufbringen einer Schicht mit Zink mit einer Dicke von 13 μm auf diesen Kern,
- Drahtziehen dieses Drahts mit 0,464 mm; die Dicke der Schicht mit Zink beträgt dann 5 μm,
- Unterziehen des so erhaltenen Rohlings einer thermischen Diffusionsbehandlung, umfassend einen Anstieg der Temperatur in 4 Stunden ausgehend von Umgebungstemperatur bis zu einem Plateau von 11 Stunden mit 140°C, gefolgt von einem Abfall der Temperatur in 5 Stunden bis zur Umgebungstemperatur; die Beschichtung weist dann eine interne Schicht von etwa 6 μm mit Messing in Phase γ und eine Oberflächenschicht aus Messing in Phase ε mit einer Dicke von etwa 2 μm auf, ohne Spuren von Zink,
- progressives Drahtziehen bis zu einem Enddurchmesser, wobei besagter Enddurchmesser vorteilhafterweise, 0,20 mm, 0,25 mm oder 0,30 mm ist.

**Claims**

**1.** - An electrode wire (1) for electric discharge machining, said electrode wire (1) comprising:

- a metal core (2), in one or more layers of metal or metal alloy,
- on the metal core (2), a coating (3) having an alloy different from that of the metal core (2) and containing more than 50 wt% zinc,

in which:

- the coating (3) comprises copper-zinc alloy (3a) of fractured γ phase,
- the coating (3) contains covered pores (5a, 5b, 5c, 5d, 5e) larger than 2 μm,

**characterized in that**:

- some or all of the pores (5a, 5b, 5c, 5d, 5e) are covered with one or more alloys of copper and zinc (3b) with more than 58% and less than 100% zinc by weight.

2. - The electrode wire as claimed in claim 1, **characterized in that** the coating (3) covers the metal core (2) at a coverage greater than 85% when the diameter of the electrode wire is about 0.30 mm, at a coverage greater than 75% when the diameter of the electrode wire is about 0.25 mm, at a coverage greater than 65% when the diameter of the electrode wire is about 0.20 mm.

3. - The electrode wire as claimed in one of claims 1 or 2, **characterized in that** the coating (3) covers the metal core (2) at a coverage greater than 85% when the diameter of the electrode wire is 0.25 mm.

4. - The electrode wire as claimed in any one of claims 1 to 3, **characterized in that** some or all of the pores (5a, 5b, 5c, 5d, 5e) are covered with one or more alloys of copper and zinc (3b) with more than 78% and less than 100% zinc by weight.

5. - The electrode wire as claimed in any one of claims 1 to 4, **characterized in that** some or all of the pores (5a, 5b, 5c, 5d, 5e) are covered with a mixture (3b) of alloys of copper and zinc of ε phase and η phase.

6. - The electrode wire as claimed in any one of claims 1 to 5, **characterized in that** the coating (3) comprises on average, in each complete cross section of the electrode wire, at least 3 covered pores (5a, 5b, 5c, 5d, 5e) larger than 2 μm.

7. - The electrode wire as claimed in any one of claims 1 to 5, **characterized in that** the coating (3) comprises on average, in each complete cross section of the electrode wire, at least 5 covered pores (5a, 5b, 5c, 5d, 5e) larger than 2 μm.

8. - The electrode wire as claimed in any one of claims 1 to 7, **characterized in that** the coating (3) contains covered pores (5a, 5b, 5c, 5d, 5e) larger than 3 μm.

9. - The electrode wire as claimed in any one of claims 1 to 8, **characterized in that** the coating (3) contains covered pores (5a, 5b, 5c, 5d, 5e) larger than 4 μm.

10. - The electrode wire as claimed in any one of claims 1 to 9, **characterized in that** the core (2) comprises a metal core (2a) and an intermediate layer (2b) of alloy of copper and zinc of β phase.

11. - The electrode wire as claimed in claim 10, **characterized in that** the core (2a) is of copper or copper alloy.

12. - A method of manufacturing an electrode wire as claimed in any one of claims 1 to 11, comprising the sequence of steps:

- taking a core of brass with 63% copper and 37% zinc, with a diameter of 1.25 mm,
- depositing a first layer of zinc with a thickness of 20 μm on this core,
- drawing to 0.30 mm,
- carrying out a diffusion heat treatment at 180°C for 2 hours for partially transforming the outer layer of zinc into a layer of γ-phase brass; the coating then comprises a layer of γ phase near the core, and an outer layer of ε phase,
- drawing to 0.25 mm.

13. - A method for producing an electrode wire as claimed in any one of claims 1 to 11, comprising the steps:

- taking a core of brass with 80% copper and 20% zinc, with a diameter of 1.20 mm,
- depositing a first layer of zinc with a thickness of 30 μm on this core,
- carrying out a first heat treatment of 20 hours at 385°C to obtain: a sublayer of β phase about 60 μm thick,

and an outer layer of γ phase about 15 μm thick,
- drawing to 0.62 mm; the γ phase fractures,
- making a coating of 3 μm of zinc on the fractured γ phase, degreased and deoxidized beforehand,
- drawing to 0.25 mm,
- carrying out a heat treatment of 5 hours at 130°C.

**14.** - A method for producing an electrode wire as claimed in any one of claims 1 to 11, comprising the steps:

- taking a core of brass with 80% copper and 20% zinc, with a diameter of 1.20 mm,
- depositing a first layer of zinc 38 μm thick on this core,
- carrying out a first heat treatment of 22 hours at 395°C to obtain: a sublayer of β phase about 76 μm thick, and an outer layer of γ phase about 15 μm thick,
- drawing to 0.62 mm; the γ phase fractures,
- carrying out a second heat treatment of 7 hours at 327°C; we obtain a layer of β-phase brass 39 μm thick, and an 8 μm layer of blocks of fractured γ-phase brass also containing β phase,
- making a coating of 6.5 μm of zinc on the fractured γ phase, degreased and deoxidized beforehand,
- drawing to 0.42 mm,
- carrying out a third heat treatment of 32 hours at 145°C, at the end of which a coating is obtained comprising an inner layer of β-phase brass 16 μm thick and a surface layer of γ-phase brass 14 μm thick,
- drawing to 0.25 mm.

**15.** - A method for producing an electrode wire as claimed in any one of claims 1 to 11, comprising the steps:

- taking a core of brass with 60% copper and 40% zinc, with a diameter of 1.20 mm,
- depositing a layer of zinc 13 μm thick on this core,
- drawing this wire to 0.464 mm, the layer of zinc then being 5 μm thick,
- subjecting the blank thus obtained to a diffusion heat treatment comprising a rise in temperature over 4 hours from room temperature up to a stationary phase of 11 hours at 140°C, followed by a fall in temperature over 5 hours down to room temperature; the coating then comprises an inner layer of γ-phase brass of about 6 μm, and a surface layer of ε-phase brass about 2 μm thick, without trace of zinc,
- gradually drawing down to a final diameter, said final diameter advantageously being 0.20 mm, 0.25 mm or 0.30 mm.

**FIG. 1**

**FIG. 2**

FIG. 3

FIG. 4

**FIG. 5**

60/40Cu/Zn core

Unalloyed Zinc

Gamma Phase Brass

50 μm

**FIG. 6**

FIG. 7

FIG. 8

**FIG. 9**

**FIG. 10**

**FIG. 11**

**FIG. 12**

**FIG. 13**

**FIG. 14**

**FIG. 15**

**FIG. 16**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CH 633739 A5
- US 5945010 A
- US 8067689 B2

- FR 2881973 A1
- EP 0930131 B1
- US 8067689 B